# EUROPÄISCHE PATENTANMELDUNG

(11) **EP 4 586 495 A1**
(43) Veröffentlichungstag der Anmeldung: **16.07.2025**
(21) Anmeldenummer: 25151080.6
(22) Anmeldetag: 10.01.2025
(51) Int. Cl.: H02P 29/024, B25F 5/00, H02J 1/00, H02P 29/028

(54) **VERFAHREN ZUM BETRIEB EINES BÜRSTENLOSEN ELEKTROMOTORS, ELEKTRONISCHE REGEL- UND/ODER STEUEREINRICHTUNG SOWIE ELEKTROWERKZEUG**

(30) Priorität: 12.01.2024 DE 102024100907
(71) Anmelder: Metabowerke GmbH, 72622 Nürtingen (DE)
(72) Erfinder: Zhang, Chunyu, 71229 Leonberg (DE); Wiesner, Bernd, 73277 Owen (DE); Eberhardt, Peter, 73776 Altbach (DE)
(74) Vertreter: Lorenz & Kollegen

(57) **Zusammenfassung**

Die Erfindung betrifft ein Verfahren zum Betrieb eines bürstenlosen Elektromotors (4), wobei eine Netzeingangsspannung (U_{Netz}) mittels eines Gleichrichters (1) in eine Gleichspannung gerichtet und diese Gleichspannung über einen Zwischenkreis (2), welcher einen Zwischenkreiskondensator (C_{ZK}) aufweist, einem mit dem Elektromotor (4) elektrisch verbundenen Wechselrichter (3) zugeführt wird, der von einer elektronischen Regel- und/oder Steuereinrichtung (5) zur Versorgung und/oder Regelung des Elektromotors (4) angesteuert wird, wobei fortlaufend die Netzeingangsspannung (U_{Netz}) gemessen und eine Qualität der gemessenen Netzeingangsspannung (U_{Netz}) bestimmt wird, und wobei in Abhängigkeit von der Qualität der gemessenen Netzeingangsspannung (U_{Netz}) der bürstenlose Elektromotor (4) in einem ersten Betriebsmodus oder in wenigstens einem weiteren Betriebsmodus betrieben wird.

## Beschreibung

Die vorliegende Erfindung betrifft ein Verfahren zum Betrieb eines bürstenlosen Elektromotors. Weiterhin betrifft die Erfindung auch8 eine elektronische Regel- und/oder Steuereinrichtung und ein Elektrowerkzeug.

Die EP 2 784 931 B1 betrifft ein Verfahren und eine Ansteuerschaltung zum Ansteuern eines bürstenlosen Elektromotors.

Aus der DE 10 2020 214 109 A1 ist ein Elektrowerkzeug bekannt, welches zum Anschluss an eine Netzspannung ausgebildet ist und eine Gleichrichteranordnung mit einem Zwischenkreis zur Bereitstellung einer Zwischenkreisspannung auf Basis der Netzspannung umfasst.

Bei bürstenlosen kabelgebundenen elektrischen Antriebssystemen wird die Netzspannung über einen Gleichrichter in eine Gleichspannung gerichtet und auf einem sogenannten Zwischenkreis gespeichert. Anschließend wird diese Gleichspannung in eine dreiphasige Spannung umgewandelt und an den Elektromotor des Antriebssystems angelegt.

Der Zwischenkreis kann beispielsweise einen Zwischenkreiskondensator umfassen, der insbesondere zur Glättung der gleichgerichteten Netzspannung dient. Für die Dimensionierung des Zwischenkreises gibt es verschiedene Ansätze. Ein erster Ansatz ist es, den Zwischenkreis so groß zu dimensionieren, dass die ZwischenkreisSpannung nahezu konstant ist. Dies ermöglicht insbesondere nahezu konstante Phasenströme für die Bestromung des Elektromotors und einen daraus resultierenden nahezu konstanten Drehmomentverlauf des Elektromotors. Ein derart groß ausgelegter Kondensator lässt sich jedoch aufgrund des begrenzten Bauraums nur schwer in einem handgeführten Elektrowerkzeug unterbringen.

Ein zweiter Ansatz kann darin bestehen, den Zwischenkreis klein zu dimensionieren, so dass die Zwischenkreisspannung der Netzspannung, insbesondere der gleichgerichteten Netzspannung, folgt. Allerdings kann ein derart kleiner Zwischenkreis zur Folge haben, dass aufgrund von Impedanzen ein Schwingkreis entsteht.

Die Induktivität der Zuleitung kann zusammen mit dem Zwischenkreiskondensator ein schwingfähiges Gebilde ergeben. Die Eigenresonanz dieses Schwingkreises ist abhängig von dem Produkt aus der Induktivität der Zuleitung und der Kapazität des Zwischenkreiskondensators. Da die Dämpfung in der Regel relativ gering ist, können die Schwingvorgänge derartiger Antriebe problematisch werden und mit einer entsprechenden Spannungserhöhung die Leistungsgrenzen der eingesetzten Halbleiterbauteile überschreiten, was zu deren Zerstörung führen kann. Der Schwingkreis wird einerseits durch die Motorregelung angeregt, welche durch Regelvorgänge eine ungleiche Stromentnahme aus dem Zwischenkreiskondensator verursacht, sowie durch den Gleichrichter, welcher plötzlich einen Ladestrom des Zwischenkreiskondensators aus dem Netz bei ansteigender Netzspannung kommutiert. Der Betrieb eines bürstenlosen Antriebs mit einem kleinen Zwischenkreis kann beispielsweise bei einer Leistung von über 1 kW aufgrund der Impedanz der Netzzuleitung instabil werden.

Aus der Praxis ist es bekannt, zur Gewährleistung der Systemstabilität dem Antriebssystem bzw. dem Elektrogerät einen sogenannten Line-Conditioner vorzuschalten. Der Einsatz eines solchen Zusatzgeräts ist jedoch, insbesondere aus Kostengründen häufig nicht erwünscht.

Der vorliegenden Erfindung liegt daher die Aufgabe zugrunde, ein Verfahren der eingangs erwähnten Art zu schaffen, welches die Nachteile des Standes der Technik vermeidet, insbesondere einen stabilen Betrieb eines bürstenlosen Elektromotors mit einem kleinen Zwischenkreis ohne Zusatzgeräte ermöglicht.

Diese Aufgabe wird erfindungsgemäß durch Anspruch 1 gelöst.

Erfindungsgemäß wird ein Verfahren zum Betrieb eines bürstenlosen Elektromotors vorgeschlagen, wobei eine Netzeingangsspannung mittels eines Gleichrichters in eine Gleichspannung gerichtet und diese Gleichspannung über einen Zwischenkreis, welcher einen Zwischenkreiskondensator aufweist, einem mit dem Elektromotor elektrisch verbundenen Wechselrichter zugeführt wird, der von einer elektronischen Regel- und/oder Steuereinrichtung zur Versorgung und/oder Regelung des Elektromotors angesteuert wird, wobei fortlaufend die Netzeingangsspannung gemessen und eine Qualität der gemessenen Netzeingangsspannung bestimmt wird, und wobei in Abhängigkeit von der Qualität der gemessenen Netzeingangsspannung der bürstenlose Elektromotor in einem ersten Betriebsmodus oder in wenigstens einem weiteren Betriebsmodus betrieben wird.

Durch die erfindungsgemäßen Maßnahmen wird ein stabiler Betrieb eines bürstenlosen Elektromotors bei Leistungen über 1 kW mit einem Standardumrichter und einem kleinen Zwischenkreis ermöglicht. Es wird eine dynamische Umschaltung des Betriebsmodus vorgeschlagen, welche immer die maximale Leistung des Antriebs gewährleistet. Die Umschaltung wird von einer Bestimmung und Beurteilung der Netzqualität abgeleitet. Sämtliche Netzbedingungen können automatisch kompensiert werden. Bei schlechten Netzbedingungen werden keine Zusatzgeräte, wie z. B. Line-Conditioner oder dergleichen benötigt. Es fallen nur geringe Mehrkosten an, da es sich um eine reine Softwarelösung handelt, welche ohne Hardwareaufwand gewährleistet, dass immer die höchstmögliche Leistung des Antriebs zur Verfügung steht. Darüber hinaus wird kein zusätzlicher Bauraum benötigt, was bei handgeführten Werkzeugen bzw. Geräten besonders vorteilhaft ist. Es erfolgt lediglich eine Messung der Netzeingangsspannung. Darüber hinaus sind nur die sonstigen, zum Betrieb einer feldorientierten Regelung (FOC) oder eine Blockkommutierung ohnehin erforderlichen Signale vonnöten (Ströme, Spannungen, Rotorposition). Der Leistungsbereich kann zwischen größer oder gleich 1 kW und 4 kW oder sogar darüber liegen. Der Anwendungsbereich kann bei einer Netzimpedanz von kleiner 1 mH bis etwa 20 mH liegen. Die Erfindung kann bei FOC- oder blockkommutierten Motorsteuerungen zum Einsatz kommen (Netz- oder Akkubetrieb). Die Motorsteuerungen können sowohl sensorbehaftet als auch sensorlos sein.

In dem ersten Betriebsmodus kann der Wechselrichter in einem Dauerbetrieb geschaltet sein.

In dem wenigstens einen weiteren Betriebsmodus:
a) kann der Wechselrichter in einem Lückbetrieb geschaltet sein, bei welchem der Wechselrichter abwechselnd zeitweise ein- und ausgeschaltet ist bzw. wird; und/oder
b) können Regelparameter, Sollwerte oder Schwellwerte für den Betrieb des Elektromotors, insbesondere anteilig in Abhängigkeit von der ermittelten Qualität der gemessenen Netzeingangsspannung, verändert werden.

Das Verändern der Sollwerte oder Schwellwerte für den Betrieb des Elektromotors in Schritt b) kann einen oder mehrere der folgenden Schritte umfassen:
- eine Soll- oder Leerlaufdrehzahl des Elektromotors wird, insbesondere anteilig reduziert;
- Grenzwerte für den Strom werden, insbesondere anteilig reduziert; und
- Abschaltgrenzen bei Überlast werden, insbesondere anteilig reduziert.

Falls eine gute Qualität der Netzeingangsspannung vorliegt, kann auf den ersten Betriebsmodus und andernfalls, insbesondere in Abhängigkeit von einer ermittelten verminderten Qualität der Netzeingangsspannung auf den entsprechenden wenigstens einen weiteren Betriebsmodus umgeschaltet werden.

Zwischen den Betriebsmodi kann stufenlos oder diskret umgeschaltet werden.

Ein stufenloses Umschalten zwischen den Betriebsmodi kann als graduelles Überführen von einem Betriebszustand in den anderen ausgeführt sein. Dies kann anteilig in Abhängigkeit von der tatsächlich bewerteten Qualität der Netzspannung erfolgen. Es können auch mehrere bzw. viele diskrete separate Betriebszustände vorgesehen sein.

Zur Bestimmung der Qualität der Netzeingangsspannung kann ein Signalverlauf der gemessenen Netzeingangsspannung mit einem zu erwartenden oder bekannten, insbesondere idealen Sinusverlauf der Netzeingangsspannung verglichen werden.

Wenigstens ein Störanteil kann in einem Signalabschnitt der gemessenen Netzeingangsspannung erfasst und mit einer Metrik bzw. Bewertungsfunktion bewertet werden, wobei die Qualität der Netzeingangsspannung als nicht gut bewertet wird, wenn die Metrik oder die Bewertungsfunktion einen vorgegebenen Grenzwert überschreiten.

In dem Signalabschnitt können eine grundsätzliche Richtung oder ein Signalverlauf der gemessenen Netzeingangsspannung, insbesondere zumindest theoretisch bekannt sein und/oder ein monotoner Signalverlauf der gemessenen Netzeingangsspannung zu erwarten sein, wobei der zu bewertende Störanteil entgegen der bekannten Richtung verläuft bzw. abweicht oder von dem bekannten bzw. monotonen Signalverlauf abweicht.

Die Metrik oder die Bewertungsfunktion für den Störanteil kann wenigstens berücksichtigen:
- eine Zeitspanne, die benötigt wird, um nach einem ersten vorübergehenden Maximum ein zweites, insbesondere höheres Maximum der Abweichung zu erreichen;
- einen erreichten absoluten Maximalwert der Abweichung bzw. eine erreichte maximale Tiefe des Störanteils; und/oder
- ein Integral zwischen dem gemessenen Signalverlauf und dem Wert eines ersten vorübergehenden Maximums solange der gemessene Signalverlauf unterhalb des Wertes des ersten Maximums bleibt.

Die Zeitspanne, die Tiefe oder das Integral können zusätzlich mit einer Gewichtsfunktion bewertet werden.

In dem Signalabschnitt können mehrere erfasste Störanteile mit einer gemeinsamen Metrik bzw. Bewertungsfunktion bewertet werden, welche mit einem gemeinsamen vorgegebenen Grenzwert verglichen werden kann.

Die Netzeingangsspannung kann zeitdiskret mit einer Abtastrate > 5 kHz, vorzugsweise 20 kHz gemessen werden und/oder die Netzeingangsspannung kann mit der gleichen Abtastrate wie eine Pulsweitenmodulation des Elektromotors gemessen werden. Die Verwendung von höheren Abtrastraten kann zu besseren Ergebnissen führen.

Die Netzeingangsspannung kann äquidistant abgetastet werden. Die Abtastintervalle können somit immer gleich lang und bezogen auf das Wirksignal sehr häufig sein.

Wenigstens ein Differenzwert zwischen einem aktuellen Messwert der Netzeingangsspannung und wenigstens einem vorhergehenden Messwert der Netzeingangsspannung kann ermittelt werden, wobei die Qualität der Netzeingangsspannung als nicht gut bewertet wird, wenn ein Absolutbetrag wenigstens eines der ermittelten Differenzwerte einen den jeweils vorhergehenden Messwerten oder den jeweiligen Differenzwerten zugeordneten Spannungsgrenzwert überschreitet.

Es können Differenzwerte von einer Anzahl zwischen 1 und 10, insbesondere von 4 vorhergehenden Messwerten der Netzeingangsspannung ermittelt werden.

Alternativ oder zusätzlich kann die Qualität der Netzeingangsspannung als nicht gut bewertet werden, wenn ein Absolutbetrag eines Messwerts der Netzeingangsspannung einen Spannungsgrenzwert, insbesondere in Höhe von etwa 120 % eines Scheitelwerts der Netzeingangsspannung überschreitet.

In Anspruch 14 ist eine elektronische Regel- und/oder Steuereinrichtung zur Ansteuerung, Versorgung und/oder Regelung eines Elektromotors angegeben, welche zur Durchführung des erfindungsgemäßen Verfahrens zum Betrieb des Elektromotors eingerichtet ist.

Die elektronische Regel- und/oder Steuereinrichtung kann dazu eingerichtet sein, ein die Netzeingangsspannung charakterisierendes Messsignal zu erhalten.

Schließlich betrifft die vorliegende Erfindung auch ein Elektrowerkzeug mit den Merkmalen des Anspruchs 15.

Das Elektrowerkzeug kann eine Anzeigevorrichtung aufweisen, welche mit der elektronischen Regel- und/oder Steuereinrichtung elektrisch verbunden sein kann, und mittels welcher der aktuelle Betriebsmodus des Elektromotors (4) anzeigbar ist.

Durch eine derartige Anzeigevorrichtung kann der Anwender über die momentane Qualität der Stromversorgung des Geräts informiert werden. Dies kann beispielsweise mittels einer an dem Gerät angeordneten rot blinkenden LED oder dergleichen erfolgen.

Ergänzend sei darauf hingewiesen, dass Begriffe, wie "umfassend" "aufweisen" oder "mit" keine anderen Merkmale oder Schritte ausschließen. Ferner schließen Begriffe "ein" oder "das", die auf einer Einzahl von Schritten oder Merkmalen hinweisen, keine Mehrzahl von Merkmalen oder Schritten aus und umgekehrt.

Weitere Merkmale und Vorteile der Erfindung ergeben sich aus der nachfolgenden Beschreibung eines Ausführungsbeispiels der Erfindung sowie aus den Unteransprüchen.

Die Erfindung ist nachfolgend unter Bezugnahme auf die beigefügten Figuren näher beschrieben. Die Figuren zeigen mehrere Merkmale der Erfindung in Kombination miteinander. Selbstverständlich vermag der Fachmann diese jedoch auch losgelöst voneinander zu betrachten und gegebenenfalls zu weiteren sinnvollen Unterkombinationen zu kombinieren, ohne dass er hierfür erfinderisch tätig werden müsste.

Es zeigen schematisch:
- Figur 1: ein Schaltbild mit einem Gleichrichter, einem Zwischenkreis und einem Wechselrichter zum Betrieb eines bürstenlosen Elektromotors;
- Figur 2: ein Flussdiagramm zur Verdeutlichung eines erfindungsgemäßen Verfahrens zum Betrieb des bürstenlosen Elektromotors;
- Figur 3: eine Darstellung zur Verdeutlichung eines ersten Betriebsmodus, insbesondere eines Dauerbetriebs im Rahmen des erfindungsgemäßen Verfahrens zum Betrieb des bürstenlosen Elektromotors;
- Figur 4: eine Darstellung zur Verdeutlichung eines weiteren Betriebsmodus, insbesondere eines Lückbetriebs im Rahmen des erfindungsgemäßen Verfahrens zum Betrieb des bürstenlosen Elektromotors;
- Figur 5: eine Darstellung zur Verdeutlichung einer Bewertung der Qualität einer Netzeingangsspannung gemäß einer ersten Ausführungsform;
- Figur 6: eine Darstellung zur Verdeutlichung einer Bewertung der Qualität der Netzeingangsspannung gemäß einer zweiten Ausführungsform; und
- Figur 7: eine Darstellung zur Verdeutlichung einer Bewertung der Qualität der Netzeingangsspannung gemäß einer dritten Ausführungsform.

In den Figuren sind funktionsgleiche Elemente mit denselben Bezugszeichen versehen.

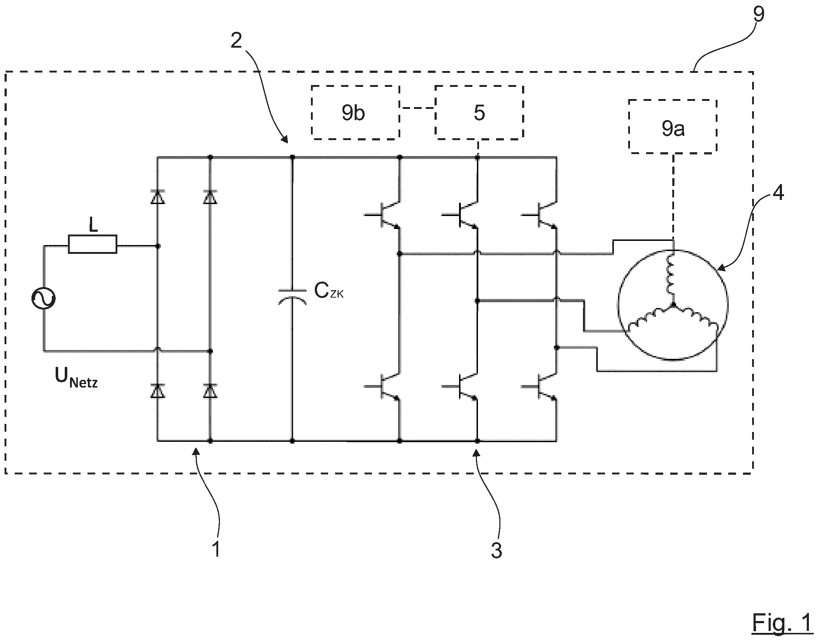

In Figur 1 ist ein vereinfachtes Schaltbild mit einem Gleichrichter 1, einem Zwischenkreis 2 und einem Wechselrichter 3 zum Betrieb eines bürstenlosen Elektromotors 4 dargestellt. Dabei wird eine Netzeingangsspannung U_{Netz} mittels des Gleichrichters 1 in eine Gleichspannung gerichtet und diese Gleichspannung über den Zwischenkreis 2, welcher einen Zwischenkreiskondensator C_{ZK} aufweist, dem mit dem Elektromotor 4 elektrisch verbundenen Wechselrichter 3 zugeführt, der von einer stark vereinfacht und gestrichelt angedeuteten elektronischen Regel- und/oder Steuereinrichtung 5 zur Versorgung und/oder Regelung des Elektromotors 4 angesteuert wird. Wie aus Figur 1 ersichtlich, kann die Netzeingangsspannung U_{Netz} eine Induktivität L aufweisen, welche zusammen mit dem Zwischenkreiskondensator C_{ZK} ein schwingfähiges Gebilde ausbilden kann. Das erfindungsgemäße Verfahren zum Betrieb des bürstenlosen Elektromotors 4 kann als reine Softwarelösung implementiert werden und einen stabilen Betrieb gewährleisten.

Erfindungsgemäß wird fortlaufend die Netzeingangsspannung U_{Netz} gemessen und eine Qualität der gemessenen Netzeingangsspannung U_{Netz} bestimmt, wobei in Abhängigkeit von der Qualität der gemessenen Netzeingangsspannung U_{Netz} der bürstenlose Elektromotor 4 in einem ersten Betriebsmodus oder in wenigstens einem weiteren Betriebsmodus betrieben wird.

Das erfindungsgemäße Verfahren kann in einem gestrichelt angedeuteten Elektrowerkzeug 9, insbesondere einem handgeführten Elektrowerkzeug 9, zumindest mit einem ebenfalls gestrichelt angedeuteten Werkzeug 9a, dem Elektromotor 4 zum Antrieb des Werkzeugs 9a und der elektronischen Regel- und Steuereinrichtung 5 zur Ansteuerung, Versorgung und/oder Regelung des Elektromotors 4 zum Einsatz kommen, wobei das Elektrowerkzeug 9 zum Anschluss an die Netzeingangsspannung U_{Netz} ausgebildet ist und ferner den Gleichrichter 1 mit dem Zwischenkreis 2, welcher den Zwischenkreiskondensator C_{ZK} umfasst, und den mit dem Elektromotor 4 elektrisch verbundenen Wechselrichter 3 aufweist und wobei die Netzeingangsspannung U_{Netz} mittels des Gleichrichters 1 in eine Gleichspannung gerichtet und diese Gleichspannung über den Zwischenkreis 2 dem Wechselrichter 3 zugeführt wird, welcher von der elektronischen Regel- und/oder Steuereinrichtung 5 zur Versorgung und/oder Regelung des Elektromotors 4 angesteuert wird.

Ferner kann das Elektrowerkzeug 9 mit einer Anzeigevorrichtung 9b versehen sein, welche mit der elektronischen Regel- und/oder Steuereinrichtung 5 elektrisch verbunden ist, und mittels welcher der aktuelle Betriebsmodus des Elektromotors 4 z. B. einem Anwender anzeigbar ist. Die Anzeigevorrichtung 9b kann beispielsweise als eine an dem Elektrowerkzeug 9 bzw. dessen Gehäuse angeordnete Leuchtdiode (LED) oder dergleichen ausgeführt sein. Falls die Qualität der Netzeingangsspannung U_{Netz} unzureichend ist, kann diese LED z. B. rot blinken.

Die elektronische Regel- und/oder Steuereinrichtung 5 kann zur Durchführung des erfindungsgemäßen Verfahrens zum Betrieb des Elektromotors 4 eingerichtet sein. Die elektronische Regel- und/oder Steuereinrichtung 5 kann ferner dazu eingerichtet sein, ein die Netzeingangsspannung U_{Netz} charakterisierendes Messsignal zu erhalten.

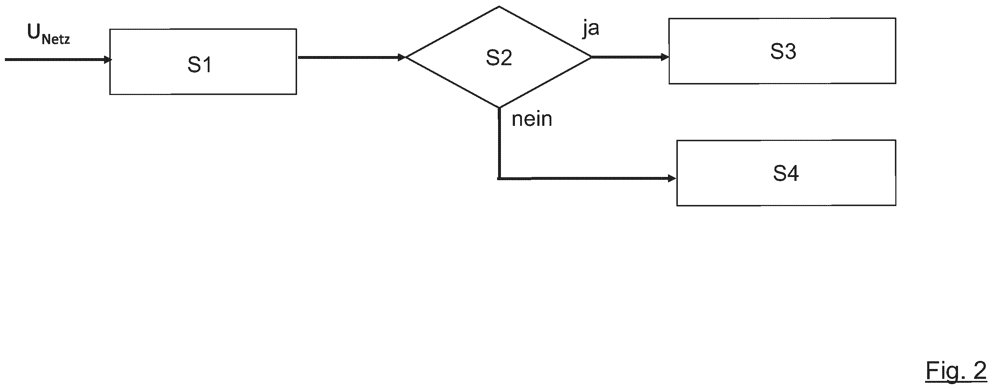

In Figur 2 ist vereinfacht ein Flussdiagramm zur Verdeutlichung des erfindungsgemäßen Verfahrens zum Betrieb des bürstenlosen Elektromotors gezeigt.

In einem Verfahrensschritt S1 wird die Qualität der gemessenen Netzeingangsspannung U_{Netz} bestimmt. Der Verfahrensschritt S1 erhält dazu fortlaufend als Eingangsgröße Messwerte der Netzeingangsspannung U_{Netz}. Die Netzeingangsspannung U_{Netz} kann dabei zeitdiskret mit einer Abtastrate > 5 kHz, vorzugsweise 20 kHz und/oder mit der gleichen Abtastrate wie eine Pulsweitenmodulation des Elektromotors 4 gemessen werden.

In einem Verfahrensschritt S2 erfolgt eine Entscheidung, wobei falls eine gute Qualität der Netzeingangsspannung U_{Netz} vorliegt ("ja"-Pfad in Figur 2), mit einem Verfahrensschritt S3 fortgefahren wird, bei welchem auf den ersten Betriebsmodus umgeschaltet wird. Andernfalls, d. h., wenn keine gute Qualität der Netzeingangsspannung U_{Netz} vorliegt ("nein"-Pfad in Figur 2), wird in einem Verfahrensschritt S4, insbesondere in Abhängigkeit von der ermittelten verminderten Qualität der Netzeingangsspannung U_{Netz} auf den entsprechenden wenigstens einen weiteren Betriebsmodus umgeschaltet.

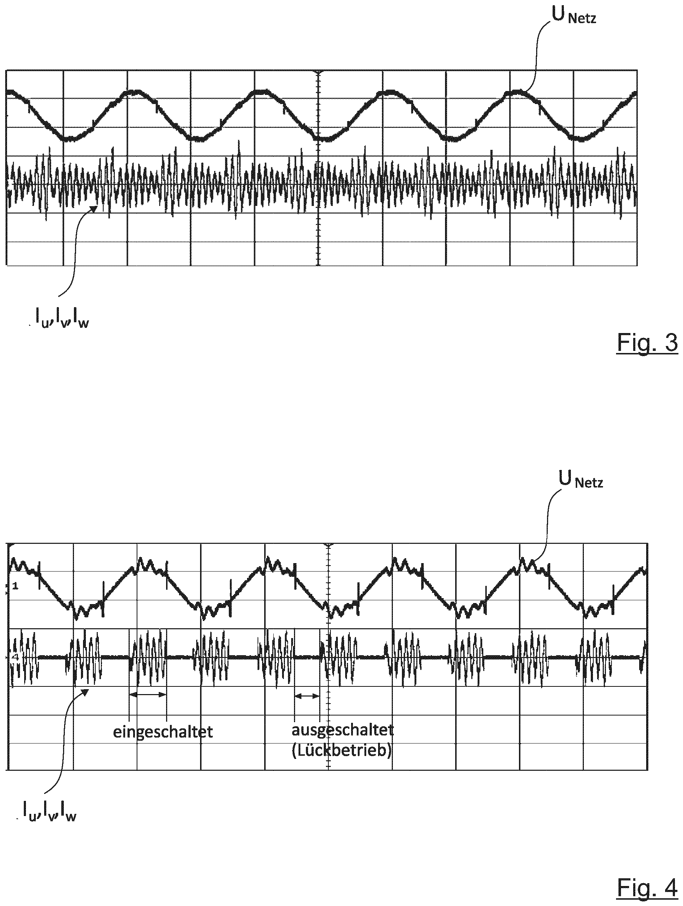

In dem ersten Betriebsmodus kann der Wechselrichter 3 in einem Dauerbetrieb geschaltet sein. In Figur 3 sind beispielhaft und vereinfacht die Verläufe der Netzeingangsspannung U_{Netz} und der Phasenströme lu, Iv, Iw in einem Dauerbetrieb des Wechselrichters 3 dargestellt.

In dem wenigstens einen weiteren Betriebsmodus:
a) kann der Wechselrichter 3 in einem Lückbetrieb geschaltet sein, bei welchem der Wechselrichter 3 abwechselnd zeitweise ein- und ausgeschaltet sein kann; und/oder
b) können Regelparameter, Sollwerte oder Schwellwerte für den Betrieb des Elektromotors 4, insbesondere anteilig in Abhängigkeit von der ermittelten Qualität der gemessenen Netzeingangsspannung U_{Netz}, verändert werden.

In Figur 4 sind beispielhaft und vereinfacht die Verläufe der Netzeingangsspannung U_{Netz} und der Phasenströme lu, Iv, Iw in einem Lückbetrieb des Wechselrichters 3 dargestellt.

Das Verändern der Sollwerte oder Schwellwerte für den Betrieb des Elektromotors 4 in Schritt b) kann einen oder mehrere der folgenden Schritte umfassen:
- eine Soll- oder Leerlaufdrehzahl des Elektromotors 4 wird, insbesondere anteilig reduziert;
- Grenzwerte für den Strom werden, insbesondere anteilig reduziert; und
- Abschaltgrenzen bei Überlast werden, insbesondere anteilig reduziert.

Zwischen den Betriebsmodi kann stufenlos oder diskret umgeschaltet werden.

Zur Bestimmung der Qualität der Netzeingangsspannung U_{Netz} kann ein Signalverlauf der gemessenen Netzeingangsspannung U_{Netz} mit einem zu erwartenden oder bekannten, insbesondere idealen Sinusverlauf der Netzeingangsspannung U_{Netz} verglichen werden.

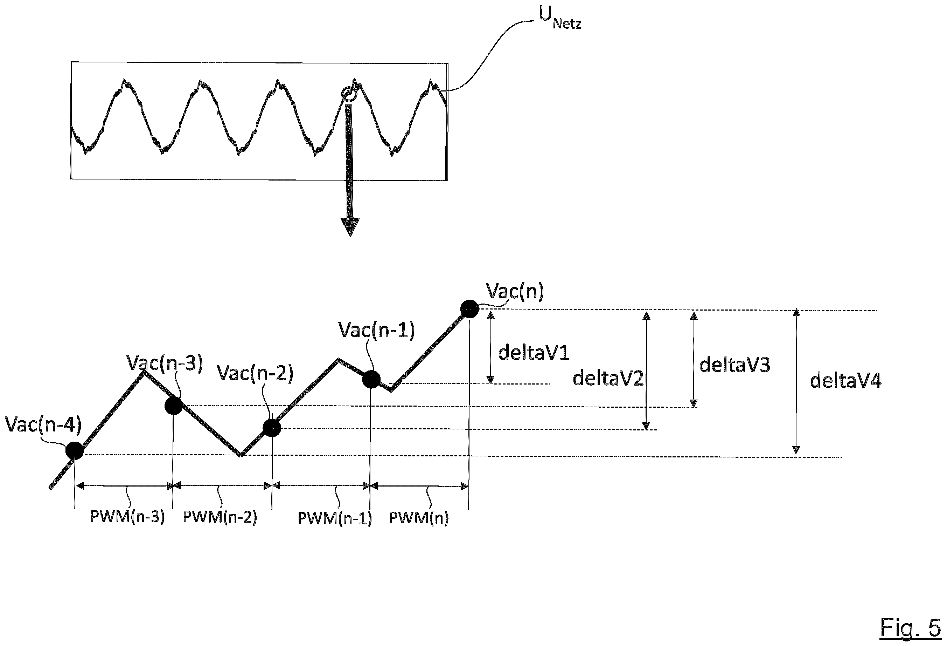

Figur 5 zeigt eine Darstellung zur Verdeutlichung einer Bewertung der Qualität einer Netzeingangsspannung gemäß einer ersten Ausführungsform. Der untere Teil der Figur 5 stellt dabei eine vereinfachte Ausschnittsvergrößerung des eingekreisten Bereichs des im oberen Teil der Figur 5 dargestellten Verlaufs der Netzeingangsspannung U_{Netz} dar. Wie aus Figur 5 ersichtlich, wird die Netzeingangsspannung U_{Netz} äquidistant, z. B. mit der gleichen Abtastrate wie die Pulsweitenmodulation des Elektromotors 4 in Abständen PWM (n-3), PWM (n-2), PWM (n-1), PWM (n) abgetastet.

Wie aus Figur 5 weiter ersichtlich, können wenigstens ein Differenzwert deltaV1 - deltaV4 zwischen einem aktuellen Messwert Vac(n) der Netzeingangsspannung U_{Netz} und wenigstens einem vorhergehenden Messwert Vac(n-4), Vac(n-3), Vac(n-2), Vac (n-1) der Netzeingangsspannung U_{Netz} ermittelt werden, wobei die Qualität der Netzeingangsspannung U_{Netz} als nicht gut bewertet wird, wenn ein Absolutbetrag wenigstens eines der ermittelten Differenzwerte deltaV1 - deltaV4 einen den jeweils vorhergehenden Messwerten Vac(n-4), Vac(n-3), Vac(n-2), Vac (n-1) oder den jeweiligen Differenzwerten deltaV1 - deltaV4 zugeordneten Spannungsgrenzwert überschreitet. Es können Differenzwerte deltaV1 - deltaV4 von einer Anzahl zwischen 1 und 10, insbesondere von 4 vorhergehenden Messwerten Vac(n-4), Vac(n-3), Vac(n-2), Vac (n-1) der Netzeingangsspannung U_{Netz} ermittelt werden.

Alternativ oder zusätzlich kann die Qualität der Netzeingangsspannung U_{Netz} als nicht gut bewertet werden, wenn ein Absolutbetrag eines Messwerts der Netzeingangsspannung U_{Netz} einen Spannungsgrenzwert, insbesondere in Höhe von etwa 120 % eines Scheitelwerts der Netzeingangsspannung U_{Netz} überschreitet.

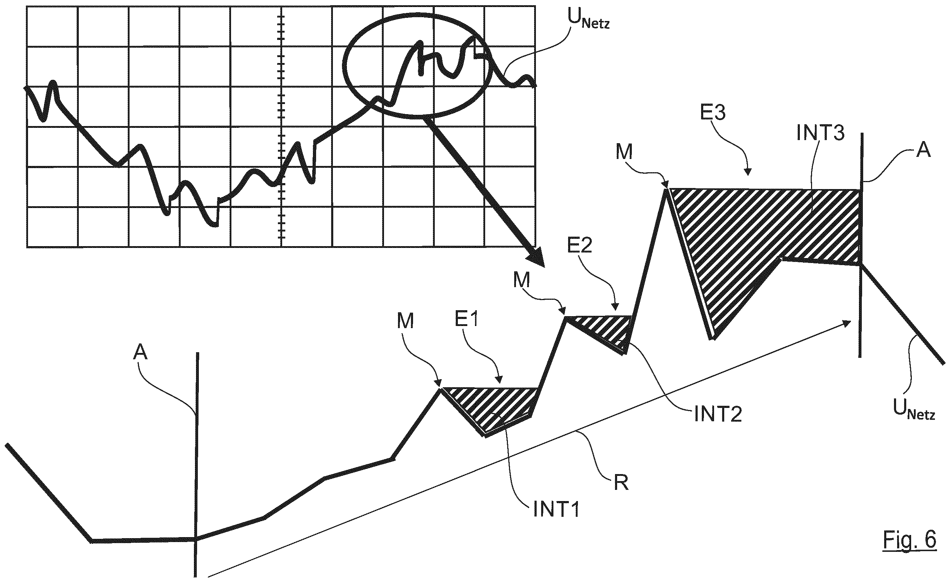

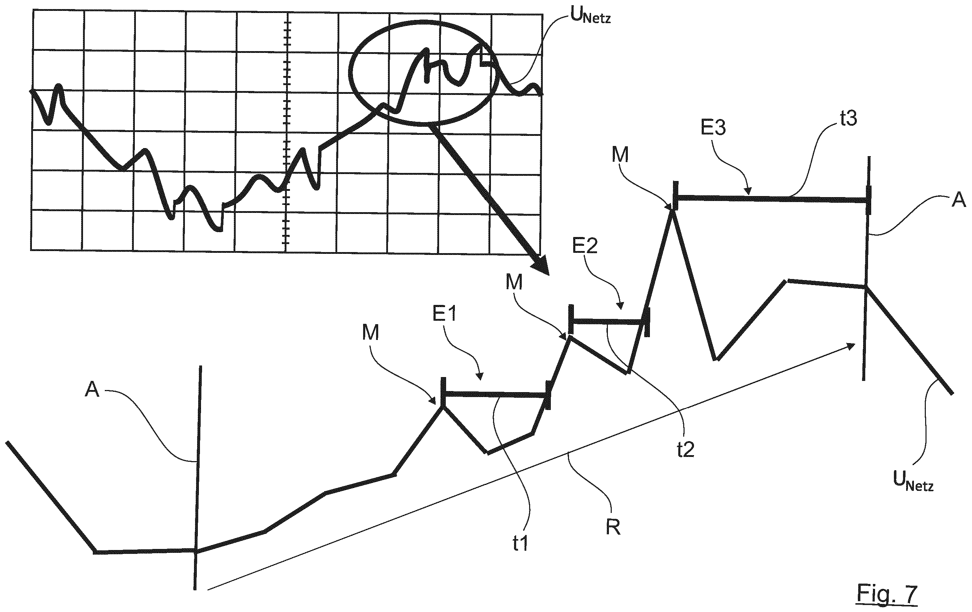

Die Figuren 6 und 7 zeigen Darstellungen zur Verdeutlichung einer Bewertung der Qualität einer Netzeingangsspannung gemäß einer zweiten und dritten Ausführungsform. Der untere Teil der Figuren 6 und 7 stellt dabei jeweils eine vereinfachte Ausschnittsvergrößerung des eingekreisten Bereichs des im oberen Teil der Figuren 6 und 7 dargestellten Verlaufs der Netzeingangsspannung U_{Netz} dar.

Wie aus den Figuren 6 und 7 ersichtlich, wird wenigstens ein Störanteil E1 - E3 in einem Signalabschnitt A der gemessenen Netzeingangsspannung U_{Netz} erfasst und mit einer Metrik bzw. Bewertungsfunktion bewertet, wobei die Qualität der Netzeingangsspannung U_{Netz} als nicht gut bewertet wird, wenn die Metrik oder die Bewertungsfunktion einen vorgegebenen Grenzwert überschreiten.

In dem Signalabschnitt A können eine grundsätzliche Richtung R oder ein Signalverlauf der gemessenen Netzeingangsspannung U_{Netz}, insbesondere zumindest theoretisch bekannt sein und/oder ein monotoner Signalverlauf der gemessenen Netzeingangsspannung U_{Netz} zu erwarten sein, wobei der zu bewertende Störanteil E1 - E3 entgegen der bekannten Richtung R verläuft bzw. abweicht oder von dem bekannten bzw. monotonen Signalverlauf abweicht.

Die Metrik oder die Bewertungsfunktion für den Störanteil E1 - E3 kann wenigstens berücksichtigen:
- eine Zeitspanne t1 - t3 die benötigt wird, um nach einem ersten vorübergehenden Maximum M ein zweites, insbesondere höheres Maximum der Abweichung zu erreichen (siehe Figur 7);
- einen erreichten absoluten Maximalwert der Abweichung bzw. eine erreichte maximale Tiefe des Störanteils E1 - E3 (nicht dargestellt); und/oder
- ein Integral INT1 - INT3 zwischen dem gemessenen Signalverlauf und dem Wert eines ersten vorübergehenden Maximums M solange der gemessene Signalverlauf unterhalb des Wertes des ersten Maximums M bleibt (siehe Figur 6).

Die Zeitspanne t1 - t3, die Tiefe oder das Integral INT1 - INT3 können zusätzlich mit einer Gewichtsfunktion bewertet werden.

In dem Signalabschnitt A können mehrere erfasste Störanteile E1 - E3 mit einer gemeinsamen Metrik bzw. Bewertungsfunktion bewertet werden, welche mit einem gemeinsamen vorgegebenen Grenzwert verglichen wird.

### Bezugszeichenliste

- 1: Gleichrichter
- 2: Zwischenkreis
- 3: Wechselrichter
- 4: Elektromotor
- 5: elektronische Regel- und/oder Steuereinrichtung
- 9: Elektrowerkzeug
- 9a: Werkzeug
- 9b: Anzeigevorrichtung
- U_{Netz}: Netzeingangsspannung
- C_{ZK}: Zwischenkreiskondensator
- S1-S4: Verfahrensschritte
- Iᵤ, Iᵥ, I_{w}: Phasenströme
- PWM(n-3) - PWM(n: Zeitabstände
- Vac(n-4) - Vac(n): Messwerte
- deltaV1 - deltaV4: Differenzwerte
- R: Richtung
- A: Signalabschnitt
- E1 - E3: Störanteile
- INT1 - INT3: Integrale
- t1 - t3: Zeitspannen
- M: vorübergehendes Maximum

## Patentansprüche

1. Verfahren zum Betrieb eines bürstenlosen Elektromotors (4), wobei eine Netzeingangsspannung (U_{Netz}) mittels eines Gleichrichters (1) in eine Gleichspannung gerichtet und diese Gleichspannung über einen Zwischenkreis (2), welcher einen Zwischenkreiskondensator (C_{ZK}) aufweist, einem mit dem Elektromotor (4) elektrisch verbundenen Wechselrichter (3) zugeführt wird, der von einer elektronischen Regel- und/oder Steuereinrichtung (5) zur Versorgung und/oder Regelung des Elektromotors (4) angesteuert wird, wobei fortlaufend die Netzeingangsspannung (U_{Netz}) gemessen und eine Qualität der gemessenen Netzeingangsspannung (U_{Netz}) bestimmt wird, und wobei in Abhängigkeit von der Qualität der gemessenen Netzeingangsspannung (U_{Netz}) der bürstenlose Elektromotor (4) in einem ersten Betriebsmodus oder in wenigstens einem weiteren Betriebsmodus betrieben wird.

2. Verfahren nach Anspruch 1, wobei in dem ersten Betriebsmodus der Wechselrichter (3) in einem Dauerbetrieb geschaltet ist.

3. Verfahren nach Anspruch 1 oder 2, wobei in dem wenigstens einen weiteren Betriebsmodus:
a) der Wechselrichter (3) in einem Lückbetrieb geschaltet ist, bei welchem der Wechselrichter (3) abwechselnd zeitweise ein- und ausgeschaltet ist; und/oder
b) Regelparameter, Sollwerte oder Schwellwerte für den Betrieb des Elektromotors (4), insbesondere anteilig in Abhängigkeit von der ermittelten Qualität der gemessenen Netzeingangsspannung (U_{Netz}), verändert werden.

4. Verfahren nach Anspruch 3, wobei das Verändern der Sollwerte oder Schwellwerte für den Betrieb des Elektromotors (4) in Schritt b) einen oder mehrere der folgenden Schritte umfasst:
- eine Soll- oder Leerlaufdrehzahl des Elektromotors (4) wird, insbesondere anteilig reduziert;
- Grenzwerte für den Strom werden, insbesondere anteilig reduziert; und
- Abschaltgrenzen bei Überlast werden, insbesondere anteilig reduziert.

5. Verfahren nach einem der Ansprüche 1 bis 4, wobei falls eine gute Qualität der Netzeingangsspannung (U_{Netz}) vorliegt, auf den ersten Betriebsmodus und andernfalls, insbesondere in Abhängigkeit von einer ermittelten verminderten Qualität der Netzeingangsspannung (U_{Netz}) auf den entsprechenden wenigstens einen weiteren Betriebsmodus umgeschaltet wird.

6. Verfahren nach einem der Ansprüche 1 bis 5, wobei zur Bestimmung der Qualität der Netzeingangsspannung (U_{Netz}) ein Signalverlauf der gemessenen Netzeingangsspannung (U_{Netz}) mit einem zu erwartenden oder bekannten, insbesondere idealen Sinusverlauf der Netzeingangsspannung (U_{Netz}) verglichen wird.

7. Verfahren nach einem der Ansprüche 1 bis 6, wobei wenigstens ein Störanteil (E1 - E3) in einem Signalabschnitt (A) der gemessenen Netzeingangsspannung (U_{Netz}) erfasst und mit einer Metrik bzw. Bewertungsfunktion bewertet wird, wobei die Qualität der Netzeingangsspannung (U_{Netz}) als nicht gut bewertet wird, wenn die Metrik oder die Bewertungsfunktion einen vorgegebenen Grenzwert überschreiten.

8. Verfahren nach Anspruch 7, wobei in dem Signalabschnitt (A) eine grundsätzliche Richtung (R) oder ein Signalverlauf der gemessenen Netzeingangsspannung (U_{Netz}) zumindest theoretisch bekannt sind und/oder ein monotoner Signalverlauf der gemessenen Netzeingangsspannung (U_{Netz}) zu erwarten ist, wobei der zu bewertende Störanteil (E1 - E3) entgegen der bekannten Richtung (R) oder von dem bekannten bzw. monotonen Signalverlauf abweicht.

9. Verfahren nach Anspruch 8, wobei die Metrik oder die Bewertungsfunktion für den Störanteil (E1 - E3) wenigstens berücksichtigt:
- eine Zeitspanne (t1 - t3), die benötigt wird, um nach einem ersten vorübergehenden Maximum (M) ein zweites, insbesondere höheres Maximum der Abweichung zu erreichen;
- einen erreichten absoluten Maximalwert der Abweichung bzw. eine erreichte maximale Tiefe des Störanteils (E1 - E3); und/oder
- ein Integral (INT1 - INT3) zwischen dem gemessenen Signalverlauf und dem Wert eines ersten vorübergehenden Maximums (M) solange der gemessene Signalverlauf unterhalb des Wertes des ersten Maximums (M) bleibt.

10. Verfahren nach einem der Ansprüche 7 bis 9, wobei in dem Signalabschnitt (A) mehrere erfasste Störanteile (E1 - E3) mit einer gemeinsamen Metrik bzw. Bewertungsfunktion bewertet werden, welche mit einem gemeinsamen vorgegebenen Grenzwert verglichen wird.

11. Verfahren nach einem der Ansprüche 1 bis 10, wobei die Netzeingangsspannung (U_{Netz}) zeitdiskret mit einer Abtastrate > 5 kHz, vorzugsweise 20 kHz gemessen wird und/oder wobei die Netzeingangsspannung (U_{Netz}) mit der gleichen Abtastrate wie eine Pulsweitenmodulation des Elektromotors (4) gemessen wird und/oder wobei die Netzeingangsspannung (U_{Netz}) äquidistant abgetastet wird.

12. Verfahren nach einem der Ansprüche 1 bis 11, wobei wenigstens ein Differenzwert (deltaV1 - deltaV4) zwischen einem aktuellen Messwert (Vac(n)) der Netzeingangsspannung (U_{Netz}) und wenigstens einem vorhergehenden Messwert (Vac(n-4), Vac(n-3), Vac(n-2), Vac (n-1)) der Netzeingangsspannung (U_{Netz}) ermittelt wird, wobei die Qualität der Netzeingangsspannung (U_{Netz}) als nicht gut bewertet wird, wenn ein Absolutbetrag wenigstens eines der ermittelten Differenzwerte (deltaV1 - deltaV4) einen den jeweils vorhergehenden Messwerten (Vac(n-4), Vac(n-3), Vac(n-2), Vac (n-1)) oder den jeweiligen Differenzwerten (deltaV1 - deltaV4) zugeordneten Spannungsgrenzwert überschreitet, wobei vorzugsweise Differenzwerte (deltaV1 - deltaV4) von einer Anzahl zwischen 1 und 10, insbesondere von 4 vorhergehenden Messwerten (Vac(n-4), Vac(n-3), Vac(n-2), Vac (n-1)) der Netzeingangsspannung (U_{Netz}) ermittelt werden.

13. Verfahren nach einem der Ansprüche 1 bis 12, wobei die Qualität der Netzeingangsspannung (U_{Netz}) als nicht gut bewertet wird, wenn ein Absolutbetrag eines Messwerts der Netzeingangsspannung (U_{Netz}) einen Spannungsgrenzwert, insbesondere in Höhe von etwa 120 % eines Scheitelwerts der Netzeingangsspannung (U_{Netz}) überschreitet.

14. Elektronische Regel- und/oder Steuereinrichtung (5) zur Ansteuerung, Versorgung und/oder Regelung eines Elektromotors (4), welche zur Durchführung eines Verfahrens zum Betrieb des Elektromotors (4) nach einem der Ansprüche 1 bis 13 eingerichtet ist, welche vorzugsweise ferner dazu eingerichtet ist, ein die Netzeingangsspannung (U_{Netz}) charakterisierendes Messsignal zu erhalten.

15. Elektrowerkzeug (9), insbesondere handgeführtes Elektrowerkzeug (9), zumindest mit einem Werkzeug (9a), einem Elektromotor (4) zum Antrieb des Werkzeugs (9a) und einer elektronischen Regel- und/oder Steuereinrichtung (5) nach Anspruch 14 zur Ansteuerung, Versorgung und/oder Regelung des Elektromotors (4), wobei das Elektrowerkzeug (9) zum Anschluss an eine Netzeingangsspannung (U_{Netz}) ausgebildet ist und ferner einen Gleichrichter (1) mit einem Zwischenkreis (2), welcher einen Zwischenkreiskondensator (C_{ZK}) umfasst, und einen mit dem Elektromotor (4) elektrisch verbundenen Wechselrichter (3) aufweist und wobei die Netzeingangsspannung (U_{Netz}) mittels des Gleichrichters (1) in eine Gleichspannung gerichtet und diese Gleichspannung über den Zwischenkreis (2) dem Wechselrichter (3) zugeführt wird, welcher von der elektronischen Regel- und/oder Steuereinrichtung (5) zur Versorgung und/oder Regelung des Elektromotors (4) angesteuert wird.
